# EUROPÄISCHE PATENTSCHRIFT

(11) **EP 4 005 839 B1**
(45) Veröffentlichungstag und Bekanntmachung des Hinweises auf die Patenterteilung: **07.12.2022**
(21) Anmeldenummer: 21000251.5
(22) Anmeldetag: 02.09.2021
(51) Int. Cl.: B60J 5/06

(54) **PLANE MIT JUSTIERBARER VORSPANNUNG UND HALTESTREIFEN ALS SICHERUNG GEGEN EINSCHNEIDEN UND MECHANISCHE ÜBERLASTUNG**
TARPAULIN WITH ADJUSTABLE PRE-TENSIONING AND HOLDING STRIPS AS PROTECTION AGAINST CUTTING AND MECHANICAL OVERLOAD
BÂCHE À PRÉCONTRAINTE POUVANT ÊTRE AJUSTÉE ET BANDES DE MAINTIEN EN TANT QUE PROTECTION CONTRE LES COUPURES ET LES SURCHARGES MÉCANIQUES

(30) Priorität: 02.09.2020 DE 102020005379
(43) Veröffentlichungstag der Anmeldung: 01.06.2022
(73) Patentinhaber: Keim, Thorald, 57439 Attendorn (DE)
(72) Erfinder: Thorald Keim, D-57439 Attendorn (DE); Thorald, Keim, D-57439 Attendorn (DE)
(74) Vertreter: Kuschel, Martin

(56) Entgegenhaltungen:
- BE-A1- 1 027 081
- DE-A1- 3 345 970
- DE-A1-102017 001 675

## Beschreibung

Die Erfindung bezieht sich auf eine elastische Plane zum Verschließen einer Freifläche im Aufbau eines Fahrzeugs oder Bauwerks, wobei die Plane mit einem Messer manuell einschlitzbar ist und auf der Plane mehrere biegsame, längliche und schnitthemmende Haltestreifen befestigt sind, wobei jeder Haltestreifen an seinen Enden mit dem Aufbau verbunden ist und ein unteres Ende über einen Spannhebel lösbar mit dem Aufbau verbunden ist und im geöffneten Zustand der Plane die Länge wenigstens eines Haltestreifens zwischen zwei benachbarten Verbindungspunkten zur Plane größer ist, als der Abstand zwischen den beiden, dazu komplementären Befestigungsbereichen im angrenzenden Teilbereich der spannungsfrei und glatt auf einer Ebene ausgelegten Plane und im verschlossenen Zustand der Freifläche wenigstens ein Haltestreifen dadurch gespannt ist, dass er mit beiden Enden mit dem Aufbau verbunden ist und zwischen benachbarten Verbindungspunkten der angrenzende Teilbereich der Plane soweit auseinander gezogen und dadurch vorgespannt ist, dass er flächig auf dem Haltestreifen aufliegt.

Auf aktuellem Stand der Technik ist der Aufbau von vielen Lastkraft-oder Eisenbahnwagen, Containern, Lagerhallen oder anderen Bauwerken ein Gestell aus Metallprofilen, dessen große Freiflächen an den Längsseiten jeweils mit Planen abgedeckt und verschlossen werden. Dadurch werden sie gegen Witterung und unerwünschte Einblicke geschützt.

Nachteilig ist jedoch, dass Vandalen oder Diebe die Planen mit einem Messer leicht einschlitzen können. Ein weiterer Nachteil ist, dass bei Fahrzeugen verrutschende oder umher fliegende Teile der Ladung eine leichte Plane zerreißen können. Dadurch geht die Ladung verloren und gefährdet andere Verkehrsteilnehmer. Der Schutz gegen Witterung, unbefugte Einblicke und Diebstahl ist beeinträchtigt.

Als Gegenmaßnahme beschreibt die DE 101 50 102 A1 ein sich rasterartig über die Plane hinweg erstreckendes, sehr grobmaschiges Netz aus Stahlseilen, die aufgeklebte oder aufgeschweißte Streifen, ebenfalls aus dem Kunststoffgewebe der Plane, festhalten. Diese Stahlseile beschränken die maximal mögliche Schnittlänge eines einschneidenden Messers auf das Rastermaß des Stahlnetzes. Wenn sich bei Belastung die elastische Plane und damit auch die darauf aufgebrachten, elastischen Gewebestreifen längen, dann behalten die kaum elastischen Stahlseile ihre Länge bei und gleiten auf den textilen Flächen. Deshalb können die Stahlseile nachteiliger Weise gegen Kräfte, die seitlich auftreffen, nur einen sehr geringen Widerstand aufbringen. Auch die aufgeklebten Streifen selbst können nur einen sehr geringen Beitrag beim Auffangen einer zusätzlichen belastenden Kraft leisten.

Ein weiterer Nachteil ist, dass sowohl die Streifen als auch die Stahlseile schon vor dem äußersten Rand der Plane enden und deshalb nicht zur Befestigung der Plane genutzt werden können. Die Reißfestigkeit der Plane bei der Sicherung gegen verrutschende Ladung ist also auf die Festigkeit des Materials der Plane selbst beschränkt.

Die EP 1 777 336 A2 erläutert eine doppellagige Plane, bei der entlang beabstandeter und sich rasterartig über die Plane hinweg kreuzender Streifen die beiden Lagen nicht miteinander verbunden sind, sondern röhrenartige Tunnel bilden, in die Stahlseile als Schnitthemmung eingebracht sind. Wenn sich bei Belastung die elastische Plane und damit auch die röhrenartigen Tunnel längen, dann gleiten die weniger elastischen Stahlseile darauf.

Trotz dieses Gleitens können die Stahlseile einschneidende Messerklingen aufhalten. Aber seitlich auftreffende Kräfte können sie kaum kompensieren, da der Rückhalt der Seile gegenüber der Plane durch das Gleiten stark eingeschränkt ist.

Der prinzipielle Nachteil beider, zuvor genannter Anordnungen ist also, dass jegliche zusätzliche Belastung von der Plane selbst aufgenommen werden muss und zwar von der gesamten Fläche, da die röhrenartigen Bereiche nicht weiter verstärkt sind. Deshalb muss das gesamte Gewebe relativ stark dimensioniert werden, wodurch die Plane insgesamt teurer und gewichtiger wird.

Gemäß DE 20 2018 103 500 U1 verlaufen parallel zur Plane vertikale Stahlstreifen, die oben und unten zusammen mit der Plane befestigt werden. Die Stahlstreifen halten einschneidende Messer auf. Zwischen den unteren Enden der Stahlstreifen und einem Hebelspanner ist eine Feder dazwischengeschaltet.

Nachteilig ist, dass bei verrutschender Ladung die nahezu unelastischen Stahlstreifen sämtliche Kräfte alleine aufnehmen müssen, wenn die Plane aus dem üblichen, elastischen PVC-Gewebe besteht und daher ohne Spannung nur sehr wenig mittragen kann. Der Maximalwert der Belastung der Stahlstreifen wird durch die zwischengeschaltete Feder nicht verändert, sondern steigt nur langsamer an.

Eine Plane gemäß DE 10 2017 001 675 A1 verteilt mechanische Belastungen zu einem ersten Teil auf mehrere, sehr unelastische und schnitthemmende senkrechte Streifen, z.B. aus Metall, die in Abständen zueinander angeordnet sind, und zu einem zweiten Teil auf das elastische Gewebe der Plane selbst, indem die Plane beim Schließen der Freifläche des Aufbaus vorgespannt wird. Eine Einschränkung ist, dass bei einer Änderung der Elastizität der Plane, z.B. durch Alterung und /oder ansonsten reversiblen Betriebsunfall keine Möglichkeit zur entsprechenden Anpassung vorgesehen ist.

Die Erfindung hat sich die Aufgabe gestellt, diese nachteiligen Effekte zu vermindern und eine Plane aus elastischem Gewebe zu schaffen, die mit schnittfesten Streifen, z.B. aus Stahl verstärkt ist, wobei diese Streifen nicht nur gegen vandalistisches Einschlitzen mit einem Messer schützen, sondern auch dabei helfen, die vorgeschriebene Festigkeit der Plane gegen seitliche Kräfte zu erreichen und die Einhaltung dieser Festigkeit auch über längere Zeit und/oder belastenden Betriebszustände hinweg zu ermöglich.

Der Schutz gegen das Einschlitzen und die Bereitschaft der Plane zum Mittragen von seitlichen Belastungen soll auch dann über die volle Fläche hinweg erhalten bleiben, wenn sich die Plane unter der Einwirkung von seitlich auftreffenden Kräften vorübergehend ausgedehnt und gelängt hat und sich danach wieder zusammenzieht. Beim Zusammenfalten der Plane soll der Kraftaufwand möglichst gering sein. Die Bereitschaft der Plane zum Mittragen von seitlichen Belastungen soll auch über einen längeren Zeitraum hinweg nach öfterem Auf- und Abwickeln oder Zusammen- und Auseinanderfalten der Plane noch wirksam sein und keine schwer verständlichen und komplexen Schritte bei der Pflege und Wartung erfordern. Die Plane soll möglichst leicht, kostengünstig und flexibel sein. Die Anzahl der Arbeitsschritte bei der Herstellung soll so niedrig wie möglich sein.

Als Lösung lehrt die Erfindung, dass zum Nachspannen der Plane der Abstand zwischen den Verbindungspunkten wenigstens eines Haltestreifens und/oder zwischen den Befestigungsbereichen der Plane durch ein Justageelement veränderbar ist.

Der Erfindung liegt das Prinzip zugrunde, das Weiterleiten und das Ableiten einer seitlich auf die Plane auftreffenden Kraft auf die Haltestreifen dadurch maßgeblich zu verbessern, dass eine Plane aus elastischem Gewebe die Freifläche im Aufbau nicht nur verschließt, sondern gleichzeitig mit dem Verschließen auch noch so weit vorgespannt wird, dass sie die Haltestreifen, die im Vergleich zur Plane kaum elastisch sind, von den zu absorbierenden Kräften in nennenswertem Umfang entlastet. Dadurch können die Haltestreifen leichter dimensioniert werden, was Kosten und Gewicht der Plane insgesamt reduziert. Bei unverändert starken Haltestreifen verstärkt sich die Rückhaltewirkung der Plane gegenüber gelockerter Ladung.

Es ist die entscheidende Erkenntnis der Erfindung, dass das Maß dieser Vorspannung auf die vorgesehene, maximale Belastung angepasst werden muss. Und zwar nicht nur bei der Herstellung, sondern auch während der Nutzungsdauer, wenn sich die Eigenschaften des Gewebes, insbesondere dessen Elastizität, ändert.

Diesen Effekt verdeutlicht zum Beispiel ein Trampolin, bei dem ein der Lkw-Plane ähnliches, ebenfalls elastisches Gewebe genutzt wird. Erst durch die angemessene allseitige Vorspannung mit Zugfedern wird es soweit gestrafft, dass es sich beim Auftreffen einer springenden Person nur um einen relativ geringen Weg verformt. Dank der Vorspannung wird die Bewegung jeder einzelnen Faser in kürzerer Zeit und mit höherem Betrag an die benachbarten und an die kreuzenden anderen Fasern weitergegeben. Dadurch verteilt sich der Druck von der direkt berührten Fläche ausgehend großräumig, so dass ein Springer auf dem vorgespannten Trampolin erstaunlich hoch springen kann.

Über Monate und Jahre hinweg erreicht der Springer bei gleichem eigenem Einsatz jedoch nur noch eine immer geringer werdende Höhe. Da ein Trampolin ebenso wie eine Lkw-Plane wechselnden Temperaturen, wechselnder Feuchtigkeit und insbesondere einer stetigen UV-Bestrahlung ausgesetzt ist, altern die Filamente des Gewebes.

Das gilt z.B. auch für das am häufigsten verwendete Gewebematerial, das Polvinylchlorid, PVC. Es ist relativ kostengünstig, gut zu verarbeiten und im Verhältnis zum Eigengewicht erstaunlich reißfest. Aber eine wesentliche Eigenschaft ist die relativ hohe Elastizität, die sich bei längerem Betrieb insbesondere durch den UV-Anteil des Sonnenlichtes merklich erhöht.

Das PVC wird ebenso wie andere Kunststoffe bei Lichteinwirkung durch Photolyse einer Photooxidation unterworfen. Dabei entstehen verschiedene Radikale, die das Material angreifen, indem sie die Hauptketten des Polymers aufbrechen, wodurch sich verschiedene polare Verbindungen, wie zum Beispiel Peroxide, bilden und in das Material einbauen. In Folge dieses Umbaus lösen sich an vielen Stellen die Bindungen zwischen einzelnen Molekülen und es bilden sich feinste Mikro-Risse bis hin zu kleinen Rissen, die auf der Außenfläche der Filamente erkennbar sind. Zwar übernehmen benachbarte, noch wenig betroffene Filamente einen Teil der Last, insgesamt aber sinkt die Belastbarkeit.

Eine andere Ursache für eine insgesamt über die Zeit hinweg zunehmende Längung der PVC-Fasern ist ihre Versprödung durch Herauslösen des Weichmachers. Schon bei Normaltemperatur schwitzen laufend sehr kleine Anteile des Weichmachers aus. Der Kontakt mit organischen Lösemitteln wie z.B. Benzol, auch als wässrige Lösung, verstärkt das Abwandern des Weichmachers. Bei einer Reckung der Faser durch mechanische Beanspruchung bilden sich dann ebenfalls feinste Risse, die sich nach Entfall der Belastung nicht wieder schließen.

Es ist das zentrale Verdienst der Erfindung, diese Effekte für eine gewisse Zeitspanne wenigstens einmal zu kompensieren, indem die Vorspannung über den Grundwert hinaus entsprechend erhöht werden kann. Dazu werden als Justageelement verschiedene mechanische Anordnungen vorgeschlagen.

Bei bevorzugten Ausführungsformen einer Plane mit erfindungsgemäßem Justageelement wird der Grundwert der Vorspannung dadurch erreicht, dass der Haltestreifen nur an zwei Punkten jeweils in der Nähe seiner beiden Enden mit der Plane verbunden ist. Sie werden im Folgenden "Verbindungspunkte" genannt und sind mit den sogenannten "Befestigungsbereichen" auf der Plane verbunden. Zwischen den beiden Verbindungspunkten verläuft der biegsame Haltestreifen im geöffneten, also ungespannten Zustand der Plane in einer ganz leichten S-Kurve, wenn sich der daran angrenzende Teilbereich der Plane bereits glatt gestreckt hat. Oder in anderen Worten: jeder Haltestreifen ist mit einem etwas "zu kurzen" Abschnitt der Plane verbunden.

Die Haltestreifen sind mit ihrem oberen Ende dauerhaft mit der oberen Kante der Freifläche im Aufbau verbunden und an ihrem unteren Ende durch einen - lösbaren- Spannhebel mit der Unterkante der Freifläche. Wenn ein Haltestreifen durch Umlegen seines Spannhebels gespannt wird, dann verläuft er grade und folglich vergrößert sich der Abstand zwischen den Verbindungspunkten auf dem Haltestreifen und den dazu korrespondierenden Befestigungsbereichen der Plane. Weil die Plane " zu kurz" ist und die Verbindung mit dem Haltestreifen ausreichend belastbar ist, wird die Plane nicht abgerissen, sondern gereckt und soweit in die Länge gezogen, bis sie flach auf dem Haltestreifen auffliegt. Damit ist in vertikaler Richtung eine wirkungsvolle Vorspannung erreicht, wie sie z.B. vom Trampolin her gut bekannt ist.

Wie zuvor am Beispiel des Trampolin erläutert, kann auch die Plane im vorgespannten Zustand größere Kräfte aufnehmen, indem das Gewebe diese auf einen größeren Bereich aufteilt, so dass die abgeleiteten Kräfte auf die Haltestreifen treffen und sich von dort über den Aufbau verteilen.

Die Haltestreifen müssen biegsam und schnitthemmend sein. Um diese Forderung zu erfüllen, können sie aus Federbandstahl oder aus einem anderen Metall oder aus parallelen oder miteinander verflochtenen Drähten oder aus Aramid oder aus miteinander verflochtenen Aramidfasern oder aus einem anderen, im Vergleich zur Plane wenig elastischem und zugfestem Material bestehen.

Als Verbindung der Verbindungspunkte jedes Haltestreifens mit dem jeweiligen komplementären Befestigungsbereich auf der Plane wird sich in der Praxis vorwiegend bewähren, dass beide jeweils eine Öffnung sind, umgangssprachlich auch als "Loch" bezeichnet. Durch diese beiden Öffnungen wird eine Schraube oder ein anderes Verbindungselement hindurchgeführt und dauerhaft so gesichert, dass eine ausreichende Anpresskraft zwischen Haltestreifen und Plane gewährleistet ist.

Zu diesem Zweck können Unterlegscheiben oder Auflageplatten die Auflagefläche weiter vergrößern. Es ist eine alternative oder zusätzliche Ausführungsvariante, an die Schraubenköpfe Verbreiterungen anzuformen, die die Auflagefläche wirkungsvoll ausdehnen.

Das entscheidende Merkmal der Erfindung ist, dass der relevante Abstand zwischen den Verbindungspunkten wenigstens eines Haltestreifens und/oder zwischen den Befestigungsbereichen der Plane durch das erfindungsgemäße Justageelement veränderbar ist.

Dieses Justageelement wird in einer besonders einfach zu produzierenden sowie beim Nachspannen intellektuell sofort nachvollziehbaren Ausführungsform dadurch verwirklicht, dass die Verbindungspunkte und/oder die Befestigungsbereiche aus zwei oder mehr in Längsrichtung der Haltestreifen b.z.w. in vertikaler Richtung der Plane jeweils zueinander beabstandeten, etwa kreisförmigen Öffnungen bestehen. Durch das Lösen der Verschraubung oder der anderen Verbindung zwischen Haltestreifen und Plane und die Wahl der anderen Öffnung oder einer der anderen Öffnungen, die näher zum Ende eines Haltestreifens und/oder weiter vom Rand der Plane entfernt angeordnet ist und abschließend durch die Widerherstellung der Verbindung wird die Vorspannung der Plane beim Verschließen der Freifläche erhöht. Oder bei zwischenzeitlich etwas "abgeschlafftem" Planengewebe wieder auf den vorherigen Wert gebracht.

Wenn durch einen Betriebsunfall nur ein begrenzter Bereich einer Plane stark gereckt worden ist, die übrigen Flächen aber unversehrt geblieben sind, so genügt es, nur in diesem Bereich die Verschraubungen zu lösen, heraus zu nehmen, Plane und Haltestreifen um den Abstand benachbarter Öffnungen gegeneinander zu verschieben, die Verschraubung in die neu übereinander liegenden Öffnungen von Haltestreifen und Plane wieder einzusetzen und abschließend ordentlich festzuziehen. Dann wird die Plane beim Spannen zwischen der Oberkante und der Unterkante der Freifläche um so viel mehr vorgespannt, dass sie wieder die vorherige Sicherheit gegen künftig vielleicht wieder einmal gelockerte Ladung bietet.

Wenn sich durch betriebsbedingte Beanspruchung und Alterung die gesamte Plane etwas gelängt hat, dann müssen natürlich alle Verschraubungen umgesetzt werden. Da diese Arbeit jedoch in der Praxis voraussichtlich nur etwa jährlich durchzuführen ist, steht dieser Aufwand in einem ökonomisch sinnvollen Verhältnis zu der andernfalls erforderlichen Neuanschaffung einer Plane.

Die beschriebenen Öffnungen können in einem Gewebe durch z.B. Verdrängen von Kett- und Schussfäden oder durch Ausstanzen und Vernähen oder Verkleben der angeschnitten Filamente geschaffen werden. In einen Metallstreifen können die Öffnungen z.B. durch Bohren, Stanzen oder Ausschneiden mit einem Laserstrahl eingebracht werden. Mit einem entsprechend unregelmäßig geformten Stanzwerkzeug oder mit einem Laserstrahl können die Öffnungen auch in einer beliebigen Form erstellt werden. Insbesondere dann, wenn der Metallstreifen nach dem Schneiden noch gehärtet wird, können innerhalb der Öffnung Ausnehmungen und Zähne geformt werden, die relativ hoch belastbar sind.

Unter dieser Voraussetzung kann als alternative Ausführungsform des erfindungsgemäßen Justageelementes aus dem Haltestreifen ein Langloch ausgeschnitten werden, das sich in Längsrichtung des Haltestreifens erstreckt und in dessen eine Längsseite zwei oder mehr, jeweils schräg nach unten weisende Ausbuchtungen zur Aufnahme der Schrauben sägezahnartig eingebracht sind.

In eine dieser Ausbuchtungen wird der Schaft der Verschraubung hineingeschoben. Bei der Fertigung wird die Verschraubung auf dem Haltestreifen in die am weitesten innen liegende Ausbuchtung eingehakt. Wenn die Plane später nachgespannt werden muss, dann wird die Verschraubung zwischen Haltestreifen und Plane nur soweit gelockert, dass der Schaft der Schraube aus seiner bisherigen Ausbuchtung heraus und in eine andere, näher zum Ende des Haltestreifens angeordnete Ausbuchtung hinein geschoben werden kann. Dann wird die Verschraubung wieder angezogen.

Eine alternative Ausführungsform eines erfindungsgemäßen Justageelementes im Haltestreifen ist ebenfalls ein Langloch, das sich in Längsrichtung des Haltestreifens erstreckt. Der obere Bereich dieses Langloches ist bei der Fertigung durch Distanzplättchen verschlossen, so dass nach unten hin nur ein kreisförmiger Teil des Langloches offen bleibt.

Wenn nur eine einmalige Möglichkeit zum Nachspannen vorgesehen werden soll, so ist nur ein einziges Distanzplättchen im oberen Teil des Langloches angeordnet. Beim Nachspannen wird die Schraubverbindung soweit gelockert, dass das einzige Distanzplättchen herausgenommen wird und der Schaft der Schraube an den oberen Anschlag des Langloches verschoben wird.

Alternativ kann das Distanzplättchen aber auch in mehrere Abschnitte unterteilt werden, die dann bei jedem Nachspannen Stück für Stück heraus genommen werden.

Die Distanzplättchen können durch eine Verklebung oder durch ganz dünne Metallstege im Langloch nur so fest gehalten werden, dass sie bei gelockerter Verschraubung heraus gezogen oder heraus gebrochen werden können. Dabei kann das Gewinde der Schraube als Werkzeug eingesetzt werden.

Eine andere Variante des Justageelementes in Haltestreifen aus federndem Stahl ist ebenfalls als Langloch geformt, das sich in Längsrichtung des Haltestreifens erstreckt. Eine oder beide Längskanten des Langloches sind als Zahnreihe ausgebildet.

In einer ersten Untervariante ist an den Schaft der Verschraubung ein komplementäres Zahnrad angeformt oder darauf befestigt, das in die Zahnreihe des Langloches eingreift und sich dabei entweder direkt auf der gegenüberliegenden, glatten Kante des Langloches abstützt oder indirekt über eine Zwischenplatte und kleine Gleitstücke. Beim Nachspannen wälzt sich durch Verdrehen der Schraube das Zahnrad auf der Zahnreihe des Langloches ab und bewegt dadurch den Haltestreifen gegenüber der Plane. Wenn das gewünschte Maß der Nachspannung erreicht ist, muss die Verschraubung mit einer Mutter festgezogen werden. Sicherheitshalber sollten im Prinzip bekannte, zusätzliche Verdrehsicherungen in die Verschraubung integriert werden.

Bei einer zweiten Untervariante der Zahnreihe im Langloch ist ein Schwenkhebel an das Zahnrad angesetzt oder angeformt ist, das sich auf der Zahnreihe des Langloches abwälzt. Das Zahnrad ist auf dem Schaft der Verschraubung drehbar gelagert. Durch Verschwenken des Hebels verdreht sich das Zahnrad und bewegt dabei die Plane gegenüber dem Haltestreifen, so dass sich die Vorspannung der Plane erhöht.

Als eine dritte Untervariante ist das Langloch an beiden Längskanten verzahnt. Dahinein wird eine Lochplatte eingesetzt, die an zwei gegenüberliegenden, parallelen Kanten mit einer komplementären Verzahnung versehen ist und damit in verschiedenen Positionen in das Langloch eingesetzt werden kann.

Alle zuvor beschriebenen Justageelemente zum Nachspannen der Plane sind sehr flach, benötigen also einen vernachlässigbar winzigen Anteil am Raum hinter der Plane. Dadurch sind sie auch relativ leicht sowie kostengünstig bei der Herstellung. Zu beachten ist, dass in den jeweils einfachsten Ausführungsformen die Plane nur stufenweise nachgespannt werden kann. Dazu muss die Verschraubung gelöst oder zumindest gelockert werden, was aber in den meisten Fällen vertretbar ist, da ein Nachjustieren nur in relativ großen Zeitabständen erforderlich ist.

Falls hingegen der Vorgang des Nachspannens sehr schnell ablaufen soll und sogar eine stufenlose Einstellbarkeit gewünscht wird, schlägt die Erfindung vor, dass die Verbindungspunkte auf den Haltestreifen und die dazu komplementären Befestigungsbereiche auf der Plane in Längsrichtung der Haltestreifen voneinander beabstandet sind. Diesen kleinen Abstand überbrückt ein Justageelement, das eine Längenverstellung in Längsrichtung der Haltestreifen ermöglicht.

Eine sehr fein justierbare Änderung ermöglicht zum Beispiel eine Gewindestange, die in eine entsprechende Gewindemutter eingreift. Alternativen sind ein Schwenkhebel mit einer spiralförmigen Kulisse und einem darin entlang gleitenden Stift oder eine Zahnstange und eine darauf in verschiedenen Positionen einrastbare Zange.

Für alle genannten und denkbaren Varianten verschiedener mechanischer Justageelemente zur Veränderung des Abstandes zwischen den Verbindungspunkten wenigstens eines Haltestreifens und/oder zwischen den Befestigungsbereichen der Plane schlägt die Erfindung vor, dass am oberen Ende der Haltestreifen als ein bewegliches Bindeglied zur Ankopplung an die Führungsrollen ein kurzer textiler Gurt dient. Dieser ermöglicht eine Bewegung des Haltestreifens gegenüber "seiner" Führungsrolle in zwei Richtungen, was das Öffnen und Schließen eines seitlichen Vorhanges sehr erleichtert.

Alternativ zu den Führungsrollen und deren Schiene im Aufbau können die oberen Enden der Haltestreifen auch mit einer horizontalen Wickelwelle verbunden werden, die in der Freifläche des Aufbaus drehbar gelagert ist. Der kleinste sinnvolle Durchmesser dieser Wickelwelle bestimmt die erforderliche Biegsamkeit der Haltestreifen. Selbstverständlich muss die Wickelwelle und deren Lagerung der Summe der maximal auf die Plane einwirkenden Kräfte standhalten können.

Bei einem nach innen hin offen sichtbaren Haltestreifen besteht die Gefahr, dass sich eine Last beim Hantieren oder beim Bewegen zwischen einem Haltestreifen und der Plane verhakt.

Um dieses Risiko ganz auszuschließen, schlägt die Erfindung in einer weiteren Ausführungsform vor, dass die Haltestreifen von einem Streifen aus dem Material der Plane abgedeckt werden. Dieser Streifen kann an seinen Randbereichen durch Schweißen, Nähen, Kleben oder durch eine andere Verbindungsmethode mit der Plane verbunden werden. Sehr wichtig ist dabei, dass dieser zusätzliche Streifen zwischen seinen Randbereichen von der Plane beabstandet ist, damit im geöffneten und entlasteten Zustand der Plane ein Bewegungsspielraum für den "zu langen" Haltestreifen vorhanden ist.

Als eine weitere Verstärkung des Bereiches der Plane um die Haltestreifen herum schlägt die Erfindung das Aufbringen eines weiteren Streifens aus dem Material der Plane vor. Die beiden vorgenannten Streifen bilden dann eine Tasche, in der jeweils ein Haltestreifen geführt wird.

Im Folgenden sollen weitere Einzelheiten und Merkmale der Erfindung anhand einiger Beispiele näher erläutert werden. Diese sollen die Erfindung jedoch nicht einschränken, sondern nur erläutern. Es zeigt in schematischer Darstellung:
- Figur 1:: Seitenansicht eines Lkw-Sattelzuges mit erfindungsgemäßen Planen als Seitenvorhang
- Figur 2:: Schnitt durch eine erfindungsgemäße Plane mit Führungsrolle und Spannhebel im losen Zustand
- Figur 3:: Schnitt durch die Plane gemäß Figur 2, jedoch im vorgespannten Zustand
- Figur 4:: Oberes Ende eines Haltestreifens mit vier kreisförmigen Öffnungen als Justageelement
- Figur 5:: Oberes Ende eines Haltestreifens mit einem Langloch, darin drei Ausbuchtungen für das Einhängen einer Schraube als Justageelement
- Figur 6:: Oberes Ende eines Haltestreifens, darin ein Langloch mit beidseitiger Verzahnung zum höhenvariablen Einklinken einer Lochplatte als Justageelement
- Figur 7:: Oberes Ende eines Haltestreifens, darin ein Langloch mit einseitiger Verzahnung zum Abwälzen eines Zahnrades an einem Schwenkhebel als Justageelement

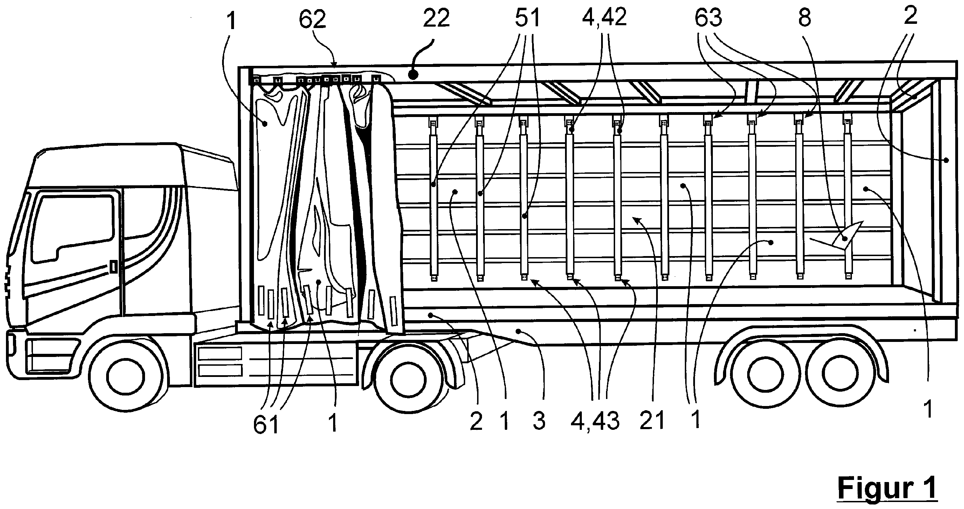

Die **Figur 1** zeigt als Fahrzeug 3 in Fluchtpunktperspektive einen Sattelzug von der Seite, dessen rahmenförmiger Aufbau 2 zu beiden Längsseiten Freiflächen 21 bietet, die mit Planen 1 verschließbar sind. Die in Fahrtrichtung linke Plane 1 ist geöffnet. Die vom Betrachter entfernte, in Fahrtrichtung rechte Freifläche 21 ist mit einer erfindungsgemäß vorgespannten Plane 1 verschlossen. Auf die Planen 1 sind parallel zueinander ausgerichtete Abdeckungen 51 aus dem gleichen oder ähnlichen, elastischen Kunststoffgewebe der Plane 1 aufgeschweißt. Sie bilden jeweils senkrechte Taschen, in die je ein Haltestreifen 4 eingesteckt ist, der unten und oben aus der Tasche herausragt.

Oberhalb der Räder des Aufliegers vom Sattelzug 3 ist ein Messer 8 zu sehen, dass in die rechte Plane 1 eingestochen worden ist und dort bereits einen Schnitt hinterlassen hat. Ein weiteres Einschneiden des Messers 8 wird jedoch von dem Haltestreifen 4 hinter der Abdeckung 51 verhindert, gegen die das Messer 8 gerade anstößt. Auf die in Figur 1 dargestellte Variante einer erfindungsgemäßen Plane 1 sind zusätzlich horizontale - nicht näher bezeichnete - Gurtbänder aus flexiblem Gewebe aufgeschweißt. Diese Gurtbänder sind zwar vom Messer 8 mit einem erhöhten Aufwand an Schnittkraft und einem zusätzlichen Zeitaufwand für das reversierende Bewegen des Messers zu durchtrennen, aber dieser Mehraufwand hemmt immerhin den hastigen Einschnitt eines nervösen Diebs, der auf sehr schnelle Beute aus ist.

Die Figur 1 zeigt also, dass das Risiko eines unwillkommenen Einschnittes mit einem Messer 8 in die Plane 1 mittels der vertikalen Haltestreifen 4 auf schmale, senkrechte Streifen beschränkt wird. Durch zusätzliche Gurtbänder kann dieser Streifen in mehrere Rechtecke aufgeteilt werden, auf deren Diagonale sich die maximale Länge eines noch wahrscheinlichen Einschnittes mit hoher Wahrscheinlichkeit beschränken wird.

In Figur 1 ist bei sehr genauem Hinsehen erkennbar, dass das untere Ende 43 des Haltestreifens 4 mittels zweier - in Figur 1 nicht näher bezeichneten - Schrauben 7 mit der Plane 1 verbunden ist. Diese Schrauben 7 verlaufen durch die Plane 1 hindurch und sind auf den Außenseiten beider Planen 1 mit den Spannhebeln 61 verschraubt. Einige solche Spannhebel 61 sind auf der dem Betrachter näheren, in Fahrtrichtung linken Plane 1 sichtbar, die locker gefaltet und nach links zusammengeschoben ist. Die übrigen Spannhebel 61 sind von den Falten der geöffneten Plane 1 verdeckt.

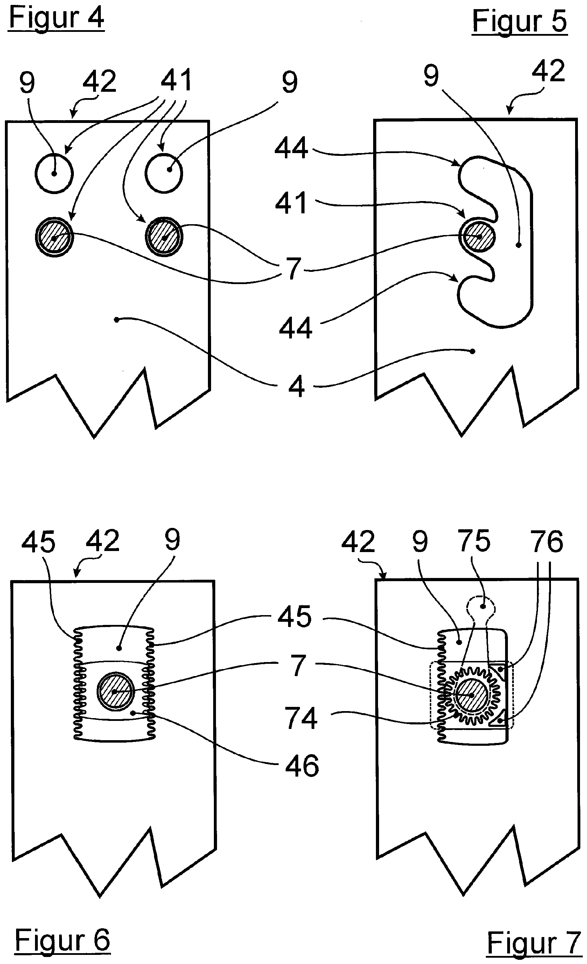

Im oberen Bereich des Aufbaus 2 ragen aus den Abdeckungen 51 die oberen Enden 42 der Haltestreifen 4 heraus. Bei sehr genauem Hinsehen sind nahe an den oberen Enden 42 vier schwarze Pünktchen zusehen. Zwei davon stellen die - in Figur 1 nicht näher bezeichneten - Schrauben 7 dar, die mit einem kurzen Textilgurt 63 verbunden sind. Die zwei weiteren Pünktchen stellen zwei Stück Öffnungen 9 dar, die aber im Maßstab der Übersichtszeichnung Figur 1 kaum erkennbar und deshalb auch nicht bezeichnet sind. Diese Öffnungen 9 sind in der Figur 4 in vergrößertem Maßstab dargestellt.

Die Figur 1 zeigt an einem Beispiel der links zusammen geschobenen, offenen Plane 1, dass jeder Textilgurt 63 an einer Führungsrolle 62 hängt. Alle Führungsrollen 62 können innerhalb der Schiene 22 horizontal verfahren werden und ermöglichen so ein leichtes Auf- und Zuziehen der Plane 1. Um die Führungsrollen 62 sichtbar werden zu lassen, ist in Figur 1 die Schiene 22 zeichnerisch aufgeschnitten.

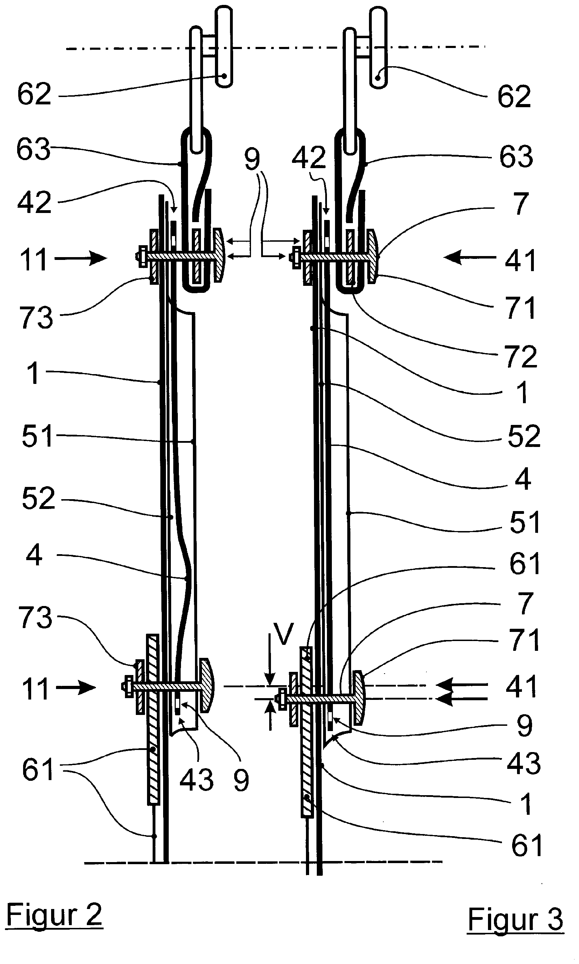

Die **Figur 2** zeigt einen Querschnitt durch eine geöffnete Plane 1 mit einem (noch) nicht gestreckten Haltestreifen 4. Die **Figur 3** im geschlossenen und damit gespannten Zustand der Plane 1. Zur besseren Sichtbarkeit der einzelnen Bestandteile sind die senkrecht ausgerichteten Komponenten wie die Plane 1, die Zwischenlage 52, der Haltestreifen 4 und die Abdeckung 51 in ihrer Länge zeichnerisch gestaucht und in die Breite auseinandergezogen. Ebenso sind die Kleinteile und anderen Komponenten auf den beiden Schrauben 7 seitlich soweit auseinandergezogen dargestellt, dass sie sich nicht mehr berühren. Vor einer tatsächlichen Benutzung müssen also die Muttern auf den Schrauben 7 noch festgezogen werden.

Eine Schraube 7 verbindet den Haltestreifen 4 an seinem oberen Ende 42 durch Öffnungen 9 hindurch sowohl mit der Plane 1 als auch mit dem Textilgurt 63. Eine weitere Schraube 7 verbindet das untere Ende 43 des Haltestreifens 4 durch andere Öffnungen 9 hindurch mit der Plane 1 und dem Spannhebel 61. Der Haltestreifen 4 ist also lediglich an zwei Orten mit der Plane 1 verbunden. Die Verbindungsorte auf dem Haltestreifen 4 sind dessen beide Verbindungspunkte 41. Die Verbindungsorte auf der Plane 1 sind die beiden Befestigungsbereiche 11. In Figur 2 und Figur 3 wird auf alle diese Verbindungsorte mit je einem Pfeil hingewiesen. Dadurch ist sehr gut erkennbar, dass im ungespannten Zustand der Abstand der Verbindungsorte auf der Plane 1 kleiner ist als der Abstand der Verbindungsorte auf dem Haltestreifen 4.

Damit ist in Figur 2 ist eine wesentliche Grundlage der Erfindung sehr gut zu erkennen, nämlich dass im geöffneten, also entspannten, aber gestreckten Zustand der Plane 1 der Abstand ihrer beiden Befestigungsbereiche 11 kleiner ist als der Abstand der beiden komplementären Verbindungspunkte 41 auf dem Haltestreifen 4. Der biegsame Haltestreifen 4 ist also im Vergleich zu dem entsprechenden Abschnitt der Plane 1 "zu lang". Dieses Übermaß wird dadurch ausgeglichen, dass sich der Haltestreifen 4 wellt. In Figur 2 ist nur eine einzige "Welle" dargestellt. In der Praxis kann der unbelastete Haltestreifen 4 sich mit mehreren kleinen Wellen in dem Hohlraum schlängeln, den die Abdeckung 51 zur Plane 1 hin bildet.

Die **Figur 3** zeigt den identischen Querschnitt durch die Plane 1 wie in Figur 2, jedoch im geschlossenen und damit gespannten Zustand. Der obere Befestigungsbereich 11 der Plane 1 und der dazu komplementäre obere Verbindungspunkt 41 des Haltestreifens 4 mit dem Textilgurt 63 und den Führungsrollen 62 sind in den Figuren 2 und 3 auf exakt gleicher Höhe dargestellt, was durch eine punktgestrichelte Linie durch die Führungsrollen 62 betont wird.

Aber der untere Befestigungsbereich 11 und der untere Verbindungspunkt 41 sind bei der Figur 3 im Vergleich zur Figur 2 um den Weg V nach unten bewegt worden. Diese Bewegung ist vom Spannhebel 61 ausgelöst worden. Der dazu erforderliche, weithin bekannte Mechanismus des Spannhebels 61 ist in den Figuren 2 und 3 jedoch der Übersichtlichkeit halber nicht dargestellt.

Stattdessen fällt in der Figur 3 die wesentliche Grundlage der Erfindung sofort ins Auge, nämlich dass der Haltestreifen 4 nunmehr ganz gerade gestreckt ist und sich flächig über die Zwischenlage 52 an die Plane 1 anschmiegt, obwohl die Plane 1 eigentlich "zu kurz" ist. Daraus folgt, dass sich die Plane 1" in die Länge" gereckt haben muss, also nunmehr gespannt ist.

Durch den Vergleich der Figuren 2 und 3 kann nachvollzogen werden, dass bei zunehmender Alterung der Plane 1 und einer folglich steigenden Elastizität oder umgangssprachlich einer "Abschlaffung" der Plane 1 auch die im geschlossenen Zustand gemäß Figur 2 erreichbare Spannung der Plane absinkt. Die Vorspannung V der Plane 1 muss entsprechend vergrößert werden. Da jedoch die Haltestreifen 4 aus Metall oder einem ähnlichen, vergleichsweise fast gar nicht dehnbaren Material bestehen, können ihre Verbindungspunkte 41 nicht weiter auseinander gezogen werden, als es durch Glattziehen der Haltestreifen 4 möglich ist. Es ist die Aufgabenstellung der Erfindung, den Haltestreifen 4 dennoch in Bezug auf seine Wirkung zu verlängern.

Die Figuren 2 und 3 präsentieren als Lösung dieser Aufgabe eine überraschend einfache Ausführungsform des erfindungsgemäßen Justageelementes. Die Verschraubung 7 ragt durch eine erste Öffnungen 9 im Haltestreifen 4 und eine zweite Öffnung 9 in der Plane 1 hindurch. In den Haltestreifen 4 sind oberhalb und unterhalb der zwei im dargestellten Zustand in Benutzung befindlichen Öffnungen 9 noch jeweils eine weitere Öffnung 9 eingebracht. Diese weiteren Öffnungen 9 sind auf dem schwarz dargestellten Querschnitt der Haltestreifen 4 als kleine weiße

Rechtecke erkennbar. Sie sind im Betriebszustand der Figuren 2 und 3 der noch unbenutzte Teil des erfindungsgemäßen Justageelementes, das auf eine spätere Verwendung wartet.

Wenn nach einigen Monaten oder vielleicht sogar einem Jahr oder mehr die Plane 1 um soviel elastischer geworden ist, dass sie für den Erhalt der ursprünglichen Sicherheit stärker gespannt werden muss, wird eine der beiden Schrauben 7 gelöst, aus der inneren Öffnung 9 herausgezogen, in die äußere Öffnung 9 wieder hineingesteckt und abschließend wieder festgezogen.

Ein wesentlicher Vorzug dieser Ausführungsform des erfinderischen Justageelementes ist, dass die zusätzlichen Öffnungen 9 bei der Herstellung des Haltestreifens 4 nur einen extrem geringen Mehraufwand erfordern.

Die **Figur 4** zeigt die Ausführungsform der Figuren 2 und 3 in der Frontansicht des oberen Endes 42 eines Haltestreifens 4. Wie in Figur 1 nur bei sehr genauem Hinsehen erkennbar, sind zwei Öffnungen 9 nebeneinander angeordnet, durch die dann auch zwei Schrauben 7 hindurchgeführt sind. Im Abstand dazu und noch näher zum Ende 42 des Haltestreifens 4 sind zwei weitere Öffnungen 9 aus dem Haltestreifen 4 ausgebohrt, ausgestanzt oder ausgeschnitten. Sie sind im Betriebszustand gemäß Figur 4, ebenso wie bei den Figuren 2 und 3 noch unbenutzt und warten auf ihren Einsatz zu einem späteren Zeitpunkt.

Auch in Figur 4 wird deutlich, dass zum Nachspannen der Plane 1 sämtliche Verschraubungen 7 nicht nur gelockert, sondern auch aus allen ursprünglich genutzten Öffnungen 7 vollständig herausgezogen werden müssen, damit sie in die Reserveöffnungen 9 eingeschoben werden können.

Die **Figuren 5 bis 7** zeigen Ausführungsformen des erfinderischen Justageelementes in Form von Langlöchern als Öffnung 9, bei denen die Verschraubung 7 nur gelockert, aber bei einer ausreichenden Länge der Schraube 7 nicht gelöst werden muss.

In **Figur 5** weist das obere Ende 42 eines Haltestreifens 4 nur eine einzige Öffnung 9 in Form eines Langloches auf. In dessen linke Längsseite sind drei Ausbuchtungen 44 eingeformt. In eine davon rastet der Schaft einer Schraube 7 ein. Im Betriebszustand gemäß Figur 5 ist die Schraube 7 aus der anfänglich als Verbindungspunkt 41 genutzten, unteren Ausbuchtung 44 bereits heraus und zwecks einer ersten Erhöhung der Vorspannung der Plane 1 in die mittlere Ausbuchtung 44 hinein verschoben worden. Es kann noch ein weiteres Mal nachgespannt werden, indem die Schraube 7 in die höchste Ausbuchtung 7 hinein geschoben wird.

Der Vorzug der Ausführungsform gemäß Figur 5 ist, dass die Vorspannung der Plane 1 in ihrem geschlossenen Zustand zweimal erhöht werden kann, ohne dazu die Verschraubung 7 unbedingt lockern zu müssen.

In **Figur 6** ist die Öffnung 9 ein Langloch, in dessen beide, zueinander parallele Längskanten je eine Zahnreihe 45 eingeformt ist. Zu diesen Zahnreihen 45 komplementär geformt sind die beiden gegenüberliegenden Zähnungen einer Lochplatte 46, durch deren mittigen Durchlass eine Schraube 7 hindurch gesteckt werden kann. Für eine Erhöhung der Vorspannung muss die Verschraubung 7 nur soweit gelockert werden, dass die Lochplatte 46 aus den Zahnreihen 45 heraus gehoben und in einer höheren Position wieder hinein gesteckt werden kann. In dieser Position wird die Lochplatte 46 durch darauf aufdrückende und ausreichend große Auflageplatten 72 und Unterlegscheiben 73 auf dem Schaft der Schraube 7 beziehungsweise durch Verbreiterungen 71 des Kopfes der Schraube 7 gehalten. Der Vorzug dieser Ausführungsvariante ist, dass die Vorspannung sehr feinstufig erhöht werden kann.

In **Figur 7** weist die Öffnung 9 nur an einer Kante eine Zahnreihe 45 auf, auf der sich ein Zahnrad 74 abwälzt. Nach einer nur ganz leichten Lockerung der Verschraubung 7 kann das Zahnrad 74 mittels eines Schwenkhebels 75 gedreht werden und senkt dadurch den Haltestreifen 4 immer weiter ab. Damit das Zahnrad 74 ohne großen Widerstand gedreht werden kann, ist es auf einer kleinen Zwischenplatte drehbar gelagert, auf der zwei kleine Gleitstücke 76 befestigt oder angeformt sind, die auf der glatten Kante der Öffnung 9 gleiten und sich darauf abstützen.

Auf dem Schaft der Schraube 7 sind dann die Zwischenplatte und eine Unterlegscheibe 73 aufgesteckt und nehmen das Zahnrad 74 zangenartig in ihre Mitte, so dass es beim Justieren der Vorspannung weiter mit der Zahnreihe 74 kämmt und nicht daraus heraus springt.

Mit allen Varianten des erfindungsgemäßen Justageelementes wird das Ziel der Erfindung erreicht, nämlich die elastische Plane 1 im geschlossenen Zustand auch nach längerer Betriebsdauer durch Streckung um einen vergrößerten Weg V vorzuspannen, damit die Plane 1 auch in höherem Alter gegenüber seitlich auftreffenden Kräften einen unverändert hohen Widerstand aufbringt, der die Haltestreifen 4 maßgeblich entlastet. Dank dieser Vorspannung wird sich auch nach längerem Einsatz der Plane 1 zum Beispiel beim Verrutschen eines Ladegutes und Auftreffen auf die Plane 1 die sich daraus ergebende Belastung sowohl auf die Plane 1 selbst als auch auf die Haltestreifen 4 verteilen. Beide Elemente werden auch dann immer noch im Idealfall etwa gleichberechtigt an der Abtragung dieser Kräfte auf den Aufbau 2 beteiligt sein.

Dadurch wird vorteilhafter Weise erreicht, dass bei einer vorgegebenen Mindestgröße für die Festigkeit gegenüber seitlich auftreffenden Kräften die Haltestreifen 4 schwächer dimensioniert werden können, weil ihnen die vorgespannte Plane 1 einen Teil der Belastung abnimmt und mitträgt. Dadurch werden die Materialkosten und das Gewicht reduziert.

Wenn Material und Querschnitt der Haltestreifen 4 nicht verbilligt und reduziert werden, dann wird durch die unterstützende Wirkung der mittragenden Plane 1 eine in Summe größere Festigkeit erreicht, also eine verbesserte Sicherung von z.B. gelockertem Ladegut.

Ein vorteilhafter Nebeneffekt der Vorspannung ist, dass im Fahrbetrieb das Flattern der Plane 1 durch den Fahrtwind vermindert wird, was die Ermüdung des Materials aus wechselnder Beanspruchung auf einen sehr viel späteren Zeitpunkt verschiebt, also die Lebensdauer der Plane 1 verlängert.

Für die Umsetzung des erfinderischen Gedankens ist es unerlässlich wichtig, dass die Haltestreifen 4 absolut rutschfest mit der Plane 1 verbunden werden. Bei der Ausführungsform gemäß den Figuren 2 und 3 sind sowohl die Verbindungspunkte 41 als auch die Befestigungsbereiche 11 als eine Öffnung 9 ausgeführt, durch das jeweils Schrauben 7 hindurch geführt sind.

An jede Schraube 7 ist jeweils eine Verbreiterung 71 angeformt. Sie presst die Abdeckung 51 auf das untere Ende 43 des Haltestreifens 4. Dieser wiederum drückt sich über die Zwischenlage 52 auf die Plane 1. Von der anderen Seite der Plane 1 her presst die Mutter auf der Schraube 7 eine Unterlegscheibe 73 entweder direkt oder mittels des sichtbaren Teils des Spannhebels 61 an die Plane 1. Diese Metallelemente vergrößern die effektive Druckfläche auf die textilen Bauteile deutlich und erhöhen dadurch die Sicherheit der Verschraubung 7.

Am oberen Ende 42 des Haltestreifens 4 drückt die Verbreiterung 71 den Textilgurt 63 auf eine "Auflageplatte 72", die sich mit ihrer anderen Seite wiederum auf einen benachbarten Abschnitt des Textilgurtes 63 abstützt.

Die Auflageplatte 72 weist vorzugsweise eine ebene Unterseite mit graden Kanten auf, um welche der Textilgurt 63 herum gefaltet ist, so dass er flächig darauf aufliegt. Mit seiner Reibung an den Flächen der Auflageplatte 72 entlastet er die Löcher im Textilgurt 63 zum Durchlass der Schrauben 7 von der Aufnahme der Zugkräfte bei Belastung des Haltestreifens 4.

### Bezugszeichenliste

- V: Vorspannung der Plane 1, in mm gemessen
- 1: Plane, verschließt Freifläche 21
- 11: Befestigungsbereich auf Plane 1, komplementär zu Verbindungspunkt 41 auf Haltestreifen 4
- 2: Aufbau
- 21: Freifläche im Aufbau 2, von Plane 1 verschließbar
- 22: Schiene am Aufbau 2 für Führungsrollen 62
- 3: Fahrzeug, trägt Aufbau 2
- 4: Haltestreifen, mit Plane 1 über Verbindungspunkte 41 verbunden
- 41: Verbindungspunkt auf Haltestreifen 4
- 42: oberes Ende eines Haltestreifens 4
- 43: unteres Ende eines Haltestreifens 4
- 44: Ausbuchtung für Schraube 7 in Öffnung 9 des Haltestreifens 4
- 45: Zahnreihe in Öffnung 9 des Haltestreifens 4
- 46: Lochplatte, passend in Zahnreihe 45
- 51: Abdeckung des Haltestreifens 4
- 52: Zwischenlage zwischen Plane 1 und Haltestreifen 4
- 61: Spannhebel am unteren Ende eines Haltestreifens 4
- 62: Führungsrollen am oberen Ende eines Haltestreifens 4
- 63: Textilgurt zwischen Haltestreifen 4 und Führungsrolle 62
- 7: Schraube, verbindet Verbindungspunkte 41 und Befestigungsbereiche 11
- 71: Verbreiterung der Schraube 7
- 72: Auflageplatten, verbunden mit Schraube 7
- 73: Unterlegscheiben auf Schraube 7
- 74: Zahnrad auf Schraube 7, komplementär zu Zahnreihe 45
- 75: Schwenkhebel, trägt Zahnrad 74
- 76: Gleitstück zur Führung des Zahnrads 74 in Öffnung 9
- 8: Messer, zum unwillkommenen Einschlitzen der Plane 1
- 9: Öffnungen, im Befestigungsbereich 11 oder im Verbindungspunkt 41

## Patentansprüche

1. Elastische Plane (1) zum Verschließen einer Freifläche (21) im Aufbau (2) eines Fahrzeugs (3) oder Bauwerks, wobei die Plane (1) mit einem Messer (8) manuell einschlitzbar ist und auf der Plane (1) mehrere biegsame, längliche und schnitthemmende Haltestreifen (4) befestigt sind, wobei
- jeder Haltestreifen (4) an seinen Enden (42,43) mit dem Aufbau (2) verbunden ist und
- ein unteres Ende (43) über einen Spannhebel (61) lösbar mit dem Aufbau (2) verbunden ist und
- im geöffneten Zustand der Plane (1) die Länge wenigstens eines Haltestreifens (4) zwischen zwei benachbarten Verbindungspunkten (41) zur Plane (1) größer ist, als der Abstand zwischen den beiden, dazu komplementären Befestigungsbereichen (11) im angrenzenden Teilbereich der spannungsfrei und glatt auf einer Ebene ausgelegten Plane (1) und
- im verschlossenen Zustand der Freifläche (21) wenigstens ein Haltestreifen (4) dadurch gespannt ist, dass er mit beiden Enden (42,43) mit dem Aufbau (2) verbunden ist und zwischen benachbarten Verbindungspunkten (41) der angrenzende Teilbereich der Plane (1) soweit auseinander gezogen und dadurch vorgespannt ist, dass er flächig auf dem Haltestreifen (4) aufliegt.
**dadurch gekennzeichnet, dass**
zum Nachspannen der Plane (1) der Abstand zwischen den Verbindungspunkten (41) wenigstens eines Haltestreifens (4) und/oder zwischen den Befestigungsbereichen (11) der Plane durch ein Justageelement veränderbar ist.

2. Plane (1) nach Anspruch 1,
**dadurch gekennzeichnet, dass**
die Haltestreifen (4) aus Federbandstahl oder aus einem anderen Metall oder aus parallelen oder miteinander verflochtenen Drähten oder aus Aramid oder aus miteinander verflochtenen Aramidfasern oder aus einem anderen, im Vergleich zur Plane (1) wenig elastischem Material bestehen.

3. Plane (1) nach einem der vorhergehenden Ansprüche,
**dadurch gekennzeichnet, dass**
die Verbindungspunkte (41) und/oder die Befestigungsbereiche (11) aus einer ersten Öffnung (9) und wenigstens einer zweiten Öffnung (9) als Justageelement bestehen, durch die hindurch eine Schraube (7) oder ein anderes, lösbares Verbindungselement führbar ist,
wobei durch das Lösen der Verbindung zwischen Haltestreifen (4) und Plane (1) und die Wahl anderer Öffnungen (9), die näher zum Ende eines Haltestreifens (4) und/oder weiter vom Rand der Plane (1) entfernt angeordnet sind und durch die Widerherstellung der Verbindung die Vorspannung der Plane (1) beim Verschließen der Freifläche (21) erhöht werden kann.

4. Plane (1) nach dem vorhergehenden Anspruch 3,
**dadurch gekennzeichnet, dass**
Unterlegscheiben (73) und/oder Auflageplatten (72) und/oder angeformte Verbreiterungen (71) der Schrauben (7) und/oder der Schraubenköpfe die Auflageflächen auf der Plane (1) und/oder auf einer Abdeckung (51) der Haltestreifen (4) vergrößern.

5. Plane (1) nach dem vorhergehenden Anspruch 3,
**dadurch gekennzeichnet, dass**
der Haltestreifen (4) zumindest teilweise aus Federstahl besteht, in den als Justageelement eine Öffnung (9) in Form eines Langloches eingebracht ist,
- das sich in Längsrichtung des Haltestreifens (4) erstreckt, wobei
- in eine Längsseite des Langlochs zwei oder mehr, jeweils schräg nach unten weisende Ausbuchtungen (44) zur Aufnahme der Schrauben (7) sägezahnartig eingebracht sind

6. Plane (1) nach dem vorhergehenden Anspruch 3,
**dadurch gekennzeichnet, dass**
der Haltestreifen (4) zumindest teilweise aus Federstahl besteht, in den als Justageelement eine Öffnung (9) in Form eines Langloches eingebracht ist,
- das sich in Längsrichtung des Haltestreifens (4) erstreckt und
- ein Teil des Langlochs durch ein oder mehrere Distanzplättchen verschlossen ist und
- Distanzplättchen zur Nachjustage der Vorspannung der Plane (1) herausnehmbar sind.

7. Plane (1) nach dem vorhergehenden Anspruch 3,
**dadurch gekennzeichnet, dass**
der Haltestreifen (4) zumindest teilweise aus Federstahl besteht, in den als Justageelement eine Öffnung (9) in Form eines Langloches eingebracht ist,
- das sich in Längsrichtung des Haltestreifens (4) erstreckt und
- eine oder beide Längskanten des Langloches als Zahnreihe (45) ausgebildet sind,
- auf der sich ein dazu komplementäres Zahnrad (74) abwälzt, das an der verbindenden Schraube (7) oder an einem flachen Schwenkhebel (75) befestigt oder angeformt ist und
- durch Verschwenken der Schraube (7) beziehungsweise des Schwenkhebels (75) die Vorspannung der Plane (1) erhöht werden kann oder
- eine Lochplatte (46) an gegenüberliegenden, parallelen Kanten eine zur Zahnreihe (45) komplementäre Zähnung aufweist und damit in verschiedenen Positionen in das Langloch eingesetzt werden kann.

8. Plane (1) nach den Ansprüchen 1 oder 2,
**dadurch gekennzeichnet, dass**
die Verbindungspunkte (41) und die jeweils naheliegenden, komplementären Befestigungsbereiche (11) in Längsrichtung der Haltestreifen (4) einen kleinen Abstand voneinander aufweisen und miteinander durch
- eine Gewindestange und eine dagegen verdrehbare, komplementäre Gewindemutter oder
- einen Schwenkhebel mit einer spiralförmigen Kulisse und einem darin entlang gleitenden Stift oder
- eine Zahnstange und eine darauf in verschiedenen Positionen einrastbare Zange
verbunden sind, die als Justageelement eine Justage der wirksamen Länge der Haltestreifen (4) ermöglicht.

9. Plane (1) nach wenigstens einem der vorhergehenden Ansprüche,
**dadurch gekennzeichnet, dass**
wenigstens ein Haltestreifen (4) über einen kurzen Textilgurt (63) mit einer Führungsrolle (62) verbunden ist.

## Claims

1. Elastic tarpaulin (1) for closing an open area (21) in the superstructure (2) of a vehicle (3) or a building, whereupon the tarpaulin (1) can be cut manually by means of a knife (8) and a plurality of flexible, elongate and cut-inhibiting holding strips (4) are fastened on the tarpaulin (1), whereupon
- each holding strip (4) is connected at its ends (42, 43) to the superstructure (2), and
- a lower end (43) is detachably connected to the superstructure (2) via a clamping lever (61) and
- in the opened state of the tarpaulin (1) the length of at least one holding strip (4) between two adjacent connection points (41) to the tarpaulin (1) is greater than the distance between the two fastening regions (11) in the adjacent subregion of the tarpaulin (1), when the tarpaulin (1) is laid out on a plain without tension, whereupon the connection points (41) are complementary to the fastening regions (11),
- in the closed state of the open area (21), at least one holding strip (4) is tensioned in such a way that it is connected to the superstructure (2) by both ends (42, 43) and, between adjacent connecting points (41), the adjacent subregion of the tarpaulin (1) is pulled apart to such an extent and is thereby pretensioned that it rests flat on the holding strip (4)
**characterized in that**
for retensioning the tarpaulin (1), the distance between the connecting points (41) of at least one holding strip (4) and/or between the fastening regions (11) of the tarpaulin (1) can be changed by an adjustment element.

2. Tarpaulin (1) according to claim 1,
**characterized in that**
the holding strips (4) are made of spring steel or of another metal or of parallel or interlaced wires or of aramid or of interlaced aramid fibres or of another material, which is of little elastic compared to the Tarpaulin (1).

3. Tarpaulin (1) according to one of the preceding claims,
**characterized in that**
the connecting points (41) and/or the fastening regions (11) consist of a first opening (9) and at least one second opening (9) as an adjustment element, through which a screw (7) or another releasable connecting element can be passed, wherein by releasing the connection between the holding strip (4) and the tarpaulin (1) and the selection of other openings (9) which are located closer to the end of a holding strip (4) and/or further away from the edge of the tarpaulin (1) and by reestablishing the connection the pretension of the tarpaulin (1) can be increased when the open area (21) is closed.

4. Tarpaulin (1) according to the preceding claim 3,
**characterized in that**
washers (73) and/or bearing plates (72) and/or integrally formed widenings (71) of the screws (7) and/or the screw heads increase the bearing surfaces on the Tarpaulin (1) and/or on a cover (51) of the holding strips (4).

5. Tarpaulin (1) according to the preceding claim 3,
**characterized in that**
the holding strip (4) consists at least partially of spring steel, into which an opening (9) in the form of an elongate hole is put into it as an adjustment element,
- extending in the longitudinal direction of the holding strip (4), whereupon
- into one longitudinal side of the elongated hole two or more bulges (44) are put in, each pointing obliquely downward, in the manner of a sawtooth, for receiving the screws (7).

6. Tarpaulin (1) according to the preceding claim 3,
**characterized in that**
the holding strip (4) consists at least partially of spring steel, into which an opening (9) in the form of an elongate hole is put into it as an adjustment element,
- extending in the longitudinal direction of the holding strip (4), and
- a part of the elongated hole is closed by one or more spacer plates, and
- spacer plates can be removed for adjusting the pre-tension of the tarpaulin (1).

7. Tarpaulin (1) according to the preceding claim 3,
**characterized in that**
the holding strip (4) consists at least partially of spring steel, into which an opening (9) in the form of an elongate hole is put into it as an adjustment element,
- extending in the longitudinal direction of the holding strip (4), and
- one or both longitudinal edges of the elongated hole are formed as a tooth row (45),
- on which a gear wheel (74) is rolling of, which is complementary to the tooth row (45) and which is fastened or formed on the connecting screw (7) or on a flat pivot lever (75), and
- by pivoting the screw (7) or the pivot lever (75), the pretension of the tarpaulin (1) can be increased or
- a perforated plate (46) has teeth complementary to the tooth rows (45) at opposite parallel edges and can thus be inserted into the elongated hole in different positions.

8. Tarpaulin (1) according to claims 1 or 2,
**characterized in that**
the connecting points (41) and the respectively nearby complementary fastening regions (11) have a small distance from one another in the longitudinal direction of the holding strips (4) and are connected with each other by
- a threaded rod and a complementary threaded nut, being rotatably relative thereto, or
- a pivot lever having a spiral-shaped slotted link and a pin sliding along it, or
- a rack and a clamp engageable thereon in different positions, as an adjustment element for adjusting the effective length of the holding strips (4).

9. Tarpaulin (1) according to at least one of the preceding claims,
**characterized in that**
at least one holding strip (4) is connected to a guide roller (62) via a short textile belt (63).

## Revendications

1. Bâche élastique (1) pour fermer une zone ouverte (21) dans la superstructure (2) d'un véhicule (3) ou d'un bâtiment, et la bâche (1) peut être incisé manuellement avec un couteau (8) et sur la bâche (1) sont fixées plusieurs bandes de maintien (4) flexibles, allongées et retardatrices aux incisions, et
- chaque bande de maintien (4) est reliée à ses extrémités (42,43) à la superstructure (2) et
- une extrémité inférieure (43) est reliée de manière amovible à la superstructure (2) par l'intermédiaire d'un levier de tension (61) et
- à l'état ouvert de la bâche (1), la longueur d'au moins une bande de maintien (4) et entre deux points de connexion (41) adjacents à la bâche (1) est plus grande que la distance entre les deux zones de fixation (11) dans la sous-région adjacente de la bâche (1), lorsque la bâche (1) est disposée sur un plan sans tension, et les points de connexion (41) sont complémentaires aux zones de fixation (11) et
- à l'état fermé de la zone ouverte (21), au moins une bande de maintien (4) est tendue de telle manière qu'elle est reliée à la superstructure (2) par ses deux extrémités (42, 43) et, entre des liaisons adjacentes des points de connexion (41), la sous-zone adjacente de la bâche (1) est écartée et tendue de manière qu'elle repose à plat sur la bande de maintien (4)
**caractérisé en ce que**
pour retendre la bâche (1), la distance entre les points de connexion (41) d'au moins une bande de maintien (4) et/ou la distance entre les zones de fixation (11) de la bâche peut être modifiée par un élément de réglage.

2. Bâche (1) selon la revendication 1,
**caractérisé en ce que**
les bandes de maintien (4) sont en acier à ressort ou en un autre métal ou en fils métallique parallèles ou entrelacés ou elles sont en aramide ou en fibres d'aramide entrelacées ou en un autre matériau moins élastique que la bâche (1).

3. Bâche (1) selon l'une des revendications précédentes,
**caractérisé en ce que**
les points de connexion (41) et/ou les zones de fixation (11) consistent en une première ouverture (9) et au moins en une deuxième ouverture (9) en tant qu'élément de réglage, à travers lesquelles une vis (7) ou un autre élément de connexion amovible peut être guidé, et la prétension de la bâche (1) lors de la fermeture de la zone ouverte (21) peut être augmentée en libérant la connexion entre la bande de maintien (4) et la bâche (1) et en sélectionnant d'autres ouvertures (9) qui sont situées plus près de l'extrémité d'une bande de maintien (4) et/ou plus loin du bord de la bâche (1) et en rétablissant la connexion.

4. Bâche (1) selon la revendication précédente 3,
**caractérisé en ce que**
des rondelles (73) et/ou des plaques d'appui (72) et/ou des évasements moulés (71) des vis (7) et/ou des têtes de vis agrandissent les surfaces de contact sur la bâche (1) et/ou sur une couverture (51) des bandes de maintien (4).

5. Bâche (1) selon la revendication précédente 3,
**caractérisé en ce que**
la bande de maintien (4) est constituée au moins partiellement d'acier à ressort, dans lequel une ouverture (9) en forme de trou oblong est réalisée comme élément de réglage,
- qui s'étend dans le sens longitudinal de la bande de maintien (4), et
- deux ou plusieurs renflements (44) sont réalisés, chacun pointant obliquement vers le bas, en dents de scie dans un côté longitudinal du trou oblong pour recevoir les vis (7).

6. Bâche (1) selon la revendication précédente 3,
**caractérisé en ce que**
la bande de maintien (4) est constituée au moins partiellement d'acier à ressort, dans lequel une ouverture (9) en forme de trou oblong est réalisée comme élément de réglage,
- qui s'étend dans le sens longitudinal de la bande de maintien (4) et
- une partie du trou oblong est fermée par une ou plusieurs plaques entretoises et
- les plaques entretoises pour le réajustement de la prétension de la bâche (1) sont démontables.

7. Bâche (1) selon la revendication précédente 3,
**caractérisé en ce que**
la bande de maintien (4) est constituée au moins partiellement d'acier à ressort, dans lequel une ouverture (9) en forme de trou oblong est réalisée comme élément de réglage,
- qui s'étend dans le sens longitudinal de la bande de maintien (4) et
- un ou les deux bords longitudinaux du trou oblong sont conçus comme une rangée de dents (45),
- sur laquelle roule une roue dentée complémentaire (74), qui est fixée ou formée sur la vis de connexion (7) ou sur un levier plat pivotant (75) et
- la prétension de la bâche (1) peut être augmentée en faisant pivoter la vis (7) ou le levier pivotant (75) ou
- une plaque perforée (46) possède des dentures sur des bords opposés, parallèles et les dentures sont complémentaires aux rangées de dents (45) et ainsi elle peut être insérée dans différentes positions dans le trou oblong.

8. Bâche (1) selon les revendications 1 ou 2,
**caractérisé en ce que**
les points de connexion (41) et les zones de fixation complémentaires (11) respectivement évidentes sont à faible distance l'un de l'autre dans la direction longitudinale des bandes de maintien (4) et ils sont reliés au moyen de
- une tige filetée et un écrou fileté complémentaires, qui peuvent être tournés l'un par rapport à l'autre, ou
- un levier pivotant avec une coulisse en forme de spirale et une cheville coulissant le long de celle-ci, ou
- une crémaillère et une pince verrouillable dans différentes positions, ce qui permet un réglage de la longueur effective des bandes de maintien (4) en tant qu'élément de réglage.

9. Bâche (1) selon au moins l'une des revendications précédentes,
**caractérisée en ce qu'**
au moins une bande de maintien (4) est reliée à un galet de guidage (62) par l'intermédiaire d'une courte bande textile (63).
